## Europäisches Patentamt
## European Patent Office
## Office européen des brevets

(11) Veröffentlichungsnummer: **0 018 486**
**A1**

(12) # EUROPÄISCHE PATENTANMELDUNG

(21) Anmeldenummer: 80101351.7

(22) Anmeldetag: 14.03.80

(51) Int. Cl.³: **B 60 P 1/02**
**B 64 F 1/31**

(30) Priorität: 30.04.79 DE 2917479

(43) Veröffentlichungstag der Anmeldung:
12.11.80 Patentblatt 80/23

(84) Benannte Vertragsstaaten:
AT BE CH DE FR GB IT LU NL SE

(71) Anmelder: **Trepel AG**
**Alte Schmelze 18-22 Trepelhaus**
**D-6200 Wiesbaden-Schierstein(DE)**

(72) Erfinder: **Bovender, Hans**
**V. Nievenheim-Strasse 22**
**D-4152 Kempen 1(DE)**

(72) Erfinder: **Richter, Peter**
**Black u. Decker-Strasse 18**
**D-6270 Idstein(DE)**

(74) Vertreter: **Röbe-Oltmanns, Georg, Dr.**
**Dotzheimer Strasse 61**
**D-6200 Wiesbaden(DE)**

(54) **Versorgungsfahrzeug mit hydraulisch anhebbarer Wechselplattform, insbesondere für den Flughafenbetrieb.**

(57) Es wird vorgeschlagen, die Nutzlastkabine (4) auf einem Tragrahmen (17) anzubringen, der in Fahrzeuglängsrichtung auf dem Scherenoberrahmen (16) verfahrbar ist. Dabei ist die Nutzlastkabine (4) mit ihrem vorderen Ende bis über das Fahrerhaus (2) vorfahrbar, wenn der Scherenoberrahmen (16) bis über die Oberseite des Fahrerhauses gehoben ist.

FIG. 2

**EP 0 018 486 A1**

3

Die Erfindung betrifft ein Versorgungsfahrzeug, insbesondere für den Flughafenbetrieb, mit einer an eine hochgelegene Öffnung, beispielsweise eines Flugzeuges, andockbaren Nutzlastkabine, die mittels hinter dem Fahrerhaus auf dem Fahrzeugchassis angebrachte und durch einen Scherenoberrahmen miteinander verbundene Hubscheren hydraulisch anhebbar und absenkbar ist.

Fahrzeuge der bezeichneten Art sind für die Versorgung von Flugzeugen im Flughafenbetrieb bekannt. Sie dienen beispielsweise als sogenannte Caterer zur Versorgung von Flugzeugen mit Proviant, als Personenbeförderungsfahrzeuge zum Verbringen einer beschränkten Anzahl von Fahrgästen vom Flughafengebäude zum Flugzeug und umgekehrt, als Krankentransportfahrzeuge für den Transport von behinderten Personen zum und vom Flugzeug und für eine Anzahl von anderen Einsatzzwecken. Je nach dem Einsatzzweck, für den ein solches Versorgungsfahrzeug bestimmt ist, ist es mit einer speziell dafür geeigneten und ausgerüsteten Nutzlastkabine versehen. Um eine ungehinderte Zugänglichkeit der Nutzlastkabine im abgesenkten Zustand zu gewährleisten, muß die Kabine bis möglichst tief auf das Fahrzeugchassis abgesenkt werden können. Das bedeutet, daß ihr dem Fahrerhaus zugewandtes Ende maximal bis an die Rückwand des Fahrerhauses reichen darf. Da es aus fahrtechnischen Gründen jedoch erforderlich ist, die auch als Koffer bezeichnete Nutzlastkabine in angehobenem Zustand mit ihrem dem Fahrerhaus zugewandten vorderen Ende an die Flugzeugöffnung anzuschließen, muß der Raum über dem Fahrerhaus überbrückt werden, da es im allgemeinen aus bedienungstechnischen Gründen nicht erwünscht, in vielen Fällen aber auch aus räumlichen Gründen nicht möglich ist, das Fahrzeug mit seinem Fahrerhaus bis unter das Flugzeug zu bewegen. Der Fahrer soll nämlich die Möglichkeit behalten, den Andockvorgang selbst zu steuern, wofür es erforderlich ist, daß er das Anschlußende der Nutzlastkabine während des Andockens durch ein
Fenster im Dach des Fahrerhauses beobachten kann.

Bekannte Versorgungsfahrzeuge der bezeichneten Art sind
daher am Vorderende der Nutzlastkabine mit einer Brücke
versehen, die ihrerseits an der Vorderseite der Kabine
relativ zu dieser auf- und abbewegbar ist. Im abgesenkten Zustand der Nutzlastkabine muß diese Brücke an der
Kabine ganz nach oben gefahren sein und erstreckt sich
in dieser Position über das Fahrerhaus. Für den Anschluß
der Nutzlastkabine an eine Flugzeugöffnung wird zuerst
die Kabine selbst hochgefahren und dann die Brücke an
der Stirnseite der Kabine bis auf Bodenhöhe der Kabine
heruntergefahren.

Durch den erforderlichen Bewegungsspielraum der Brücke
gegenüber der Nutzlastkabine ist es technisch nicht
möglich, die Anschlußbrücke so auszubilden, daß sich die
Nutzlastkabine mit ihrem gesamten stirnseitigen Umfang
dicht an die zu bedienende Flugzeugöffnung anschließen
läßt, um beispielsweise einen wirksameren Schutz bei
Regenwetter oder anderen Witterungseinflüssen zu bieten.

Der vorliegenden Erfindung liegt daher die Aufgabe zugrunde, ein Versorgungsfahrzeug der eingangs bezeichneten
Art zu schaffen, dessen Nutzlastkabine sich mit ihrer
vorderen Stirnseite in einem Bereich oberhalb des Fahrerhauses ohne Verwendung einer Anschlußbrücke unmittelbar
an die zu bedienende Flugzeugöffnung anschließen läßt,
sich aber dennoch hinter dem Fahrerhaus des Fahrzeuges
bis hinunter auf das Fahrzeugchassis absenken läßt.

Diese Aufgabe wird erfindungsgemäß dadurch gelöst, daß
die Nutzlastkabine auf einem Tragrahmen angebracht ist,
der in axialer Richtung des Fahrzeuges auf dem Scherenoberrahmen verfahrbar ist. Dabei soll die Kabine mit ihrem Vorderende bis über das Fahrerhaus vorfahrbar sein, wenn der Scherenoberrahmen bis über die Oberseite des Fahrerhauses angehoben ist.

Dadurch ist es möglich, das Vorderende der Nutzlastkabine für den Andockvorgang an die Flugzeugöffnung bis in den Sichtbereich des Fahrers vorzufahren und den unmittelbaren Anschluß an die Flugzeugöffnung ohne Verwendung einer Zwischenbrücke auszuführen. In diesem Fall läßt sich die Nutzlastkabine an ihrem vorderen Anschlußende mit einem Faltenbalg versehen, der sich allseitig um die Flugzeugöffnung herum an das Flugzeug anlegen läßt. Vor dem Absenken auf das Fahrzeugchassis muß die Nutzlastkabine dann wieder so weit zurückgefahren werden können, daß ihr Vorderende beim Absenken nicht in Kollision mit dem Fahrerhaus gerät. Diese Position ist dann im allgemeinen die hinterste Stellung der Nutzlastkabine.

Da der hintere Zugang zur Nutzlastkabine normalerweise nicht benötigt wird, während die Kabine im vorgefahrenen Zustand an eine Flugzeugöffnung angeschlossen ist, stört es auch nicht, wenn in dieser Stellung der Scherenoberrahmen über das Hinterende der Nutzlastkabine hinausragt.

Eine Verfahrbarkeit der Nutzlastkabine mit ihrem Tragrahmen auf dem Scherenoberrahmen bietet gleichzeitig ohne wesentlichen weiteren technischen Aufwand die Möglichkeit, die Nutzlastkabine durch horizontale Verschiebung relativ zum Fahrzeuggang von dem Scherenoberrahmen herunterzufahren und sie somit austauschbar zu machen. Ein solcher Austauschvorgang läßt sich sehr einfach ausführen, indem die Nutzlastkabine im abgesenkten oder fast abgesenkten Zustand seitlich des Fahrzeuges auf dem Untergrund abgestützt und das Fahrzeug dann unter der abgestützten Kabine herausgefahren wird. Auf diese Weise kann für ein und dasselbe Trägerfahrzeug eine Anzahl von Nutzlastkabinen unterschiedlichen Verwendungszweckes vorgesehen werden, die beispielsweise nebeneinander in Parkposition abgestellt sind und je nach Bedarf durch Einfahren des Trägerfahrzeuges mit seinem Scherenoberrahmen in den Tragrahmen der jeweiligen Kabine mit dem Fahrzeug verbunden werden können. So können beispielsweise für ein einziges Fahrzeug ein Caterering-Koffer, eine Luxuskabine für bevorzugt zu behandelnde Fluggäste oder ein Aufsatz für den Behindertentransport vorgesehen werden.

In der technischen Ausführung weist der Scherenoberrahmen zweckmäßigerweise zwei in Fahrzeuglängsrichtung verlaufende Doppel-T-Träger auf, in deren jeweils einer Seitenvertiefung die Losenden der Hubscheren mittels Rollen geführt sind, und in deren jeweils entgegengesetzten Seitenvertiefungen der Tragrahmen der Nutzlastkabine mittels Rollen verfahrbar ist. Die Rollen der Nutzlastkabine können ihrerseits wiederum an Doppel-T-Träger des Tragrahmens befestigt sein.

Im folgenden wird die Erfindung unter Hinweis auf die beigefügten Zeichnungen im einzelnen noch näher erläutert.

Es stellen dar:

Fig. 1 die Seitenansicht eines Versorgungsfahrzeuges mit abgesenkter Nutzlastkabine, die beispielsweise für den Behindertentransport ausgebildet ist;

Fig. 2 das Versorgungsfahrzeug gemäß Fig. 1 mit angehobener und vorgefahrener Nutzlastkabine, die mit ihrem stirnseitigen Faltenbalg an einen angedeuteten Flugzeugrumpf angeschlossen ist, und

Fig. 3 einen schematischen Querschnitt durch einen Teil des Tragrahmens und des Scherenoberrahmens, um deren gegenseite Anordnung und Verschiebbarkeit zu verdeutlichen.

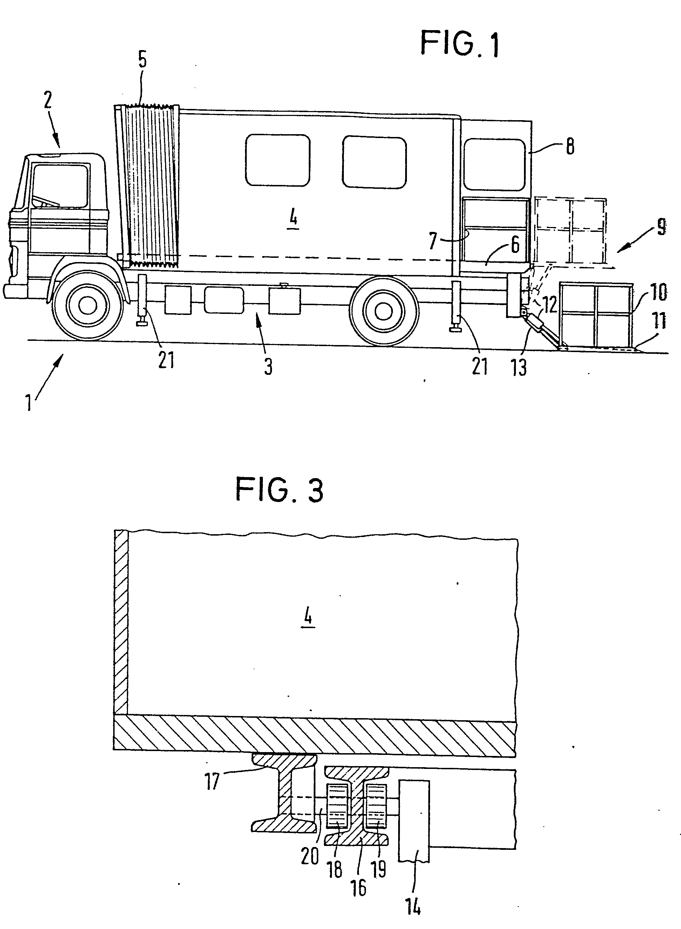

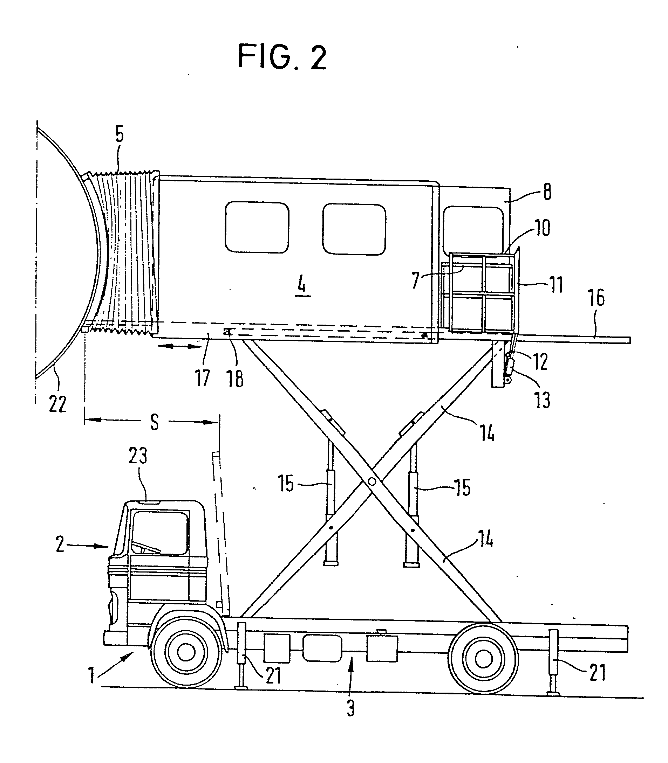

Das in Fig. 1 dargestellte Versorgungsfahrzeug besteht aus einem Lastkraftfahrzeug 1 üblicher Bauart mit einem Fahrerhaus 2 und einem Fahrzeugchassis 3. Hinter dem Fahrerhaus 2 ist auf dem Fahrzeugchassis 3 ein hydraulisch anhebbarer Koffer bzw. eine Nutzlastkabine 4 angeordnet. Die Mittel für das hydraulische Anheben der Nutzlastkabine 4 sind bei deren abgesenktem Zustand im Fahrzeugchassis verborgen und daher nicht sichtbar. Die im gezeigten Ausführungsbeispiel für den Behindertentransport ausgerüstete Nutzlastkabine ist an ihrer vorderen Stirnseite mit einem Faltenbalg 5. zum Anschluß an eine Flugzeugöffnung versehen. In abgesenkter Stellung erfolgt der Zugang zur Kabine über deren hinteres Ende. Dieses weist eine Verlängerungsplattform 6 mit seitlichen Geländern 7 auf, gegen die Flügeltüren 8 im geöffneten Zustand zum Anliegen kommen. Am hinteren Ende der Verlängerungsplattform 6 ist eine Lifteinrichtung 9 für Behindertenfahrzeuge angebracht, die aus einer mit seitlichen Geländern 10 versehenen Hubplattform 11 besteht, die mittels zweier schwenkbarer hydraulischer Zylinder 12 und 13 auf den Untergrund absenkbar und in eine Anschlußposition (in Fig. 1 strichpunktiert dargestellt) an die Verlängerungsplattform 6 anhebbar ist. Bei Nichtgebrauch kann die Lifteinrichtung 9, wie dies aus Fig. 2 hervorgeht, mit ihrer Hubplattform 11 senkrecht gestellt werden, wobei sie gleichzeitig einen Abschluß für die Verlängerungsplattform 6 bildet.

Fig. 2 zeigt das Versorgungsfahrzeug mit angehobener Nutzlastkabine 4, die von im Fahrzeugchassis 3 verankerten, ausgefahrenen Hubscheren 14 getragen ist, die mittels hydraulischer Zylinder in die angehobene Stellung gespreizt werden können. Die Hubeinrichtung besteht (was aus den zeichnerischen Darstellungen nicht zu erkennen ist) aus zwei parallelen Hubscheren, die durch Traversen miteinander verbunden sind, an denen auch die hydraulischen Zylinder 15 angreifen. An ihrem oberen Ende sind die Hubscheren 14 durch einen Scherenoberrahmen 16 miteinander verbunden, wobei jedoch die Losenden der Scheren gleitbar in den Scherenoberrahmen gelagert sind. Die Losenden der Scherenblätter sind die in Fig. 2 rechts liegenden Enden.

Die Nutzlastkabine 4 ist an ihrer Unterseite mit einem Tragrahmen 17 verbunden, der in axialer Richtung des Fahrzeuges mittels Rollen 18 verschiebbar vom Scherenoberrahmen getragen ist. Die konstruktive Zuordnung von Scherenoberrahmen 16 und Tragrahmen 17 ist in Fig. 2 lediglich schematisch angedeutet. Eine mögliche Ausführungsform ist in der Schnittzeichnung der Fig. 3 dargestellt. Danach besteht der Scherenoberrahmen 16 an jeder Seite aus einem Doppel-T-Träger, in dessen rechter Vertiefung (Fig. 3) das Losende der Hubschere 14 verschiebbar mittels einer Rolle 19 geführt ist. Der Tragrahmen 17 der Nutzlastkabine 4 besteht ebenfalls aus Doppel-T-Trägern, in denen mittels Wellen 20 Rollen 18 gelagert sind, die in die entgegengesetzten Vertiefungen der Doppel-T-Träger des Scherenoberrahmens eingreifen, wodurch der Tragrahmen 17 im Scherenoberrahmen 16 in horizontaler Richtung verfahrbar ist. Die Anordnung ist so, daß die Träger des Scherenoberrahmens 16 etwas tiefer liegen als die Träger des Tragrahmens 17, so daß die Nutzlastkabine 4 sich ungehindert oberhalb des Scherenoberrahmens verschieben läßt. Der konstruktiven Anordnung der Fig. 3 läßt sich auch entnehmen, daß diese auf einfachste Weise so gestaltet werden kann, daß sich der Tragrahmen 17 mit der Nutzlastkabine 4 ohne weiteres aus dem Scherenoberrahmen 16

9

herausfahren und vom Trägerfahrzeug 1 trennen läßt. Dadurch wird eine einfache Auswechselbarkeit der Nutzlastkabine erreicht.

Zur Stabilisierung des Trägerfahrzeuges 1 bei angehobener Nutzlastkabine ist das Chassis 3 des Fahrzeuges mit Stabilisierungsstützen 21 versehen.

In Fig. 2 ist ein Teil eines Flugzeugrumpfes 22 angedeutet, an den die Nutzlastkabine 4 mittels des Faltenbalges 5 angeschlossen ist. Hinter dem Fahrerhaus 2 ist in Fig. 2 in strichpunktierten Linien die Position des stirnseitigen Endes der Nutzlastkabine 4 im abgesenkten Zustand dargestellt. Gegenüber dieser Position ist die Kabine 4 zum Anschluß an den Flugzeugrumpf 22 um die Strecke S vorgeschoben worden. In dieser Stellung der Kabine kann der Fahrer den Andockvorgang an das Flugzeug durch ein Dachfenster 23 im Fahrerhaus 2 leicht beobachten. Das Überstehen des hinteren Endes des Scherenoberrahmens 16 gegenüber der Kabine stört bei angehobener Kabine nicht.

Durch die horizontale Verschiebbarkeit der Nutzlastkabine 4 auf dem Scherenoberrahmen 16 erübrigen sich Überladebrücken oder ähnliche Hilfseinrichtungen, wie sie bisher am stirnseitigen Vordereinde der Kabine verwendet werden mußten. Durch die horizontale Verfahrbarkeit der Kabine wird andererseits erreicht, daß diese hinter dem Fahrerhaus bis auf das Fahrzeugchassis 3 abgesenkt werden kann, ohne mit dem Fahrerhaus 2 in Kollision zu geraten.

Die dargestellte Konstruktion ermöglicht ferner einen gegen Wettereinflüsse geschützten allseitigen Anschluß der Kabine an den Flugzeugrumpf, was mit den bisher üblichen, an der Stirnseite der Kabine in ihrer Höhe verfahrbaren Überladebrücken nicht möglich war.

Wird die Nutzlastkabine 4 in einer Parkposition des Fahrzeuges durch geeignete (nicht gezeigte) Mittel auf dem Untergrund abgestützt, so kann das Trägerfahrzeug unter der Kabine herausfahren, wobei der Scherenoberrahmen 16 der Hubeinrichtung und der Tragrahmen 17 der Kabine voneinander getrennt werden. Auf diese Weise ist es möglich, je nach Einsatzbedarf das Trägerfahrzeug 1 mit Nutzlastkabinen 4 unterschiedlichen Verwendungszwekkes zu bestücken. Diese zustätzliche Möglichkeit ergibt sich in einfacher Weise aus der in Richtung der Fahrzeugachse vorgesehenen Verfahrbarkeit der Nutzlastkabine auf dem Scherenoberrahmen 16.

1

Patentansprüche:

1.) Versorgungsfahrzeug, insbesondere für den Flughafenbetrieb, mit einer an eine hochgelene Öffnung,
beispielsweise eines Flugzeuges, andockbaren Nutzlastkabine, die mittels hinter dem Fahrerhaus auf
dem Fahrzeugchassis angebrachter und durch einen
Scherenoberrahmen miteinander verbundene Hubscheren
hydraulisch anhebbar und absenkbar ist, dadurch
gekennzeichnet, daß die Nutzlastkabine (4) auf einem
Tragrahmen (17) angebracht ist, der in axialer
Richtung des Fahrzeuges (1) auf dem Scherenoberrahmen (16) verfahrbar ist.

2.) Versorgungsfahrzeug nach Anspruch 1, dadurch gekennzeichnet, daß der Tragrahmen (17) mit der Nutzlastkabine (4) nach Anheben des Scherenoberrahmens (16)
bis über die Oberseite des Fahrerhauses (2) verfahrbar ist.

3.) Versorgungsfahrzeug nach Anspruch 2, dadurch gekennzeichnet, daß die Nutzlastkabine (4) an ihrer dem
Fahrerhaus (2) zugewandten Stirnseite mit einem Faltenbalg (5) zum Anschluß an eine zu bedienende Ladeöffnung versehen ist.

4.) Versorgungsfahrzeug nach einem der Ansprüche 1 bis 3,
dadurch gekennzeichnet, daß die Nutzlastkabine (4)
austauschbar ist, indem der Trägerrahmen (17) durch
axiales Verfahren vom Scherenoberrahmen (16)
trennbar ist.

2

5.) Versorgungsfahrzeug nach Anspruch 4, dadurch gekennzeichnet, daß die Nutzlastkabine (4) mittels Stützen auf dem Untergrund abstützbar und das Trägerfahrzeug (1) unter relativer Verschiebung zwischen Tragrahmen (17) und Scherenoberrahmen (16) unter der abgestützten Nutzlastkabine (4) herausfahrbar ist.

6.) Versorgungsfahrzeug nach einem der Ansprüche 1 bis 5, dadurch gekennzeichnet, daß der Scherenoberrahmen (16) zwei in Längsrichtung des Fahrzeuges verlaufende Doppel-T-Träger aufweist, in deren jeweils einer Seitenvertiefung die Losenden der Hubscheren (14) geführt sind, und in deren jeweils entgegengesetzten Seitenvertiefungen der Tragrahmen (17) mittels Rollen (18) geführt ist.

7.) Versorgungsfahrzeug nach einem der Ansprüche 4 bis 6, dadurch gekennzeichnet, daß es mit Nutzlastkabinen unterschiedlichen Einsatzzweckes bestückbar ist.

## FIG.1

## FIG. 3

# FIG. 2

| | Europäisches Patentamt | **EUROPÄISCHER RECHERCHENBERICHT** | Nummer der Anmeldung |
| | | | EP 80 10 1351.7 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 034 095 (SOVARREL) <br> * Seite 9, Zeilen 36 bis 39; <br>  Fig. 11, 12 * <br> -- | 1 |
| | US - A - 2 412 158 (KUEHLMAN et al.) <br> * Fig. 1 * <br> -- | 1,5 |
| | DE - B - 2 121 468 (MAN) <br> * ganzes Dokument * <br> -- | 1,5,7 |
| | DE - B - 1 909 462 (SCHMIDT) <br> * ganzes Dokument * <br> -- | 1,3 |
| | DE - A - 1 755 118 (FRÖTSCHL) <br> * ganzes Dokument * <br> ---- | 1 |

**KLASSIFIKATION DER ANMELDUNG (Int.Cl.3)**

B 60 P    1/02
B 64 F    1/31

**RECHERCHIERTE SACHGEBIETE (Int. Cl.3)**

B 60 P    1/00
B 64 F    1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 06-06-1980 | LUDWIG |

EPA form 1503.1   08.78